# EUROPÄISCHE PATENTANMELDUNG

(11) **EP 1 151 975 A1**
(43) Veröffentlichungstag der Anmeldung: **07.11.2001**
(21) Anmeldenummer: 01110333.0
(22) Anmeldetag: 26.04.2001
(51) Int. Cl.: C05F 17/02

(54) **Verfahren und Vorrichtung zum Kompostieren von Abfällen**

(30) Priorität: 04.05.2000 DE 10021606
(71) Anmelder: HERHOF UMWELTTECHNIK GmbH, D-35606 Solms-Niederbiel (DE)
(72) Erfinder: Hoffmann, Hermann, 35606 Solms-Niederbiel (DE); Mutz, Bend, 35606 Solms-Niederbiel (DE)
(74) Vertreter: Zinnecker, Armin, Dipl.-Ing.

(57) **Zusammenfassung**

Ein Verfahren dient zum Kompostieren von Abfällen in einem geschlossenen Behälter (1), in dem die Abfälle (11) auf einem Lochboden (9) aufliegen und von einem sauerstoffhaltigen Gas, vorzugsweise Luft, durchströmt werden. Um ein derartiges Verfahren zu verbessern wird der Druck in dem Raum (20) über den Abfällen (11) derart gesteuert und/oder geregelt, daß sich der Deckel des Behälters (1) nicht einwölbt oder auswölbt (einzige Figur).

## Beschreibung

Die Erfindung betrifft ein Verfahren zum Kompostieren von Abfällen in einem geschlossenen Behälter, in dem die Abfälle auf einem Lochboden aufliegen und von einem sauerstoffhaltigen Gas, vorzugsweise Luft, durchströmt werden. Sie betrifft ferner einen geschlossenen Behälter zum Kompostieren von Abfällen mit einem Lochboden und einer Belüftungseinrichtung.

Bei den Abfällen kann es sich insbesondere um Hausmüll oder hausmüllähnliche Abfälle handeln. Die Abfälle enthalten organische Stoffe in einem mehr oder weniger großem Anteil, die kompostiert werden können. Die Abfälle werden in den Behälter eingebracht, wo sie in einer Schüttung auf dem Lochboden aufliegen. Durch die Schüttung ist gewährleistet, daß die Abfälle von der Luft oder dem sonstigen sauerstoffhaltigen Gas durchströmt werden können und daß der Sauerstoff die Abfälle erreichen kann.

Bisher wurden die Behälter (Rotteboxen, Rottecontainer) mittels Stetigfördergeräten oder Radladegeräten befüllt oder entleert. Die DE-OS 198 07 035 erwähnt erstmals die Beschickung mehrere übereinanderliegender Behälter (Rotteboxen, Rottecontainer) durch einen Greiferkran, wobei allerdings die Einfüllung wie auch die Ausbringung des Rottegutes durch eine frontale Öffnung in horizontaler Richtung erfolgen. Dies ist mit dem Nachteil verbunden, daß die Raumausnutzung in dem Behälter vermindert ist, da der Transportweg des Kranes freigehalten werden muß, wodurch sehr viel Totraum entsteht.

Die DE-OS 198 32 269 erwähnt erstmals die Beschickung von Behältern (Rotteboxen, Rottecontainern) von oben, wobei ein Deckel die Behälter verschließt. Der Behälter kann durch den Beschickungskran geöffnet und geschlossen werden, indem der Deckel abgehoben bzw. aufgesetzt wird. Dies hat den Nachteil, daß Einbauten, die an den Wänden der Behälter vorgesehen sein können, beispielsweise zur Rückführung von Sickerwasser zwecks Verregnung zur Nachbefeuchtung oder Verdunstung, vom Kran beschädigt werden können. Ferner kann es vorkommen, daß die Deckel nicht gleichmäßig abgehoben oder abgelegt werden. Die Auflageflächen und die Deckeloberflächen können durch herabfallende Abfallteile verschmutzt werden, wenn die Behälter gefüllt oder entleert werden. Diese Verschmutzung war bisher nur manuell zu beseitigen und dadurch mit einem erhöhten Arbeitsaufwand und auch mit einer besonderen Unfallgefahr verbunden.

Dieser Kompostierungsbehälter berücksichtigt auch nicht die mit der Be- und Entlüftung verbundenen Besonderheiten eines Druckausgleiches zur Öffnung des Deckels. Weiterhin wurde festgestellt, daß kranbeschickte Behälter mit höheren Schüttungen betrieben werden müssen, wenn eine bessere Raumnutzung und eine gleichmäßigere Belüftung erreicht werden sollen. Aufgrund der größeren Schütthöhen müssen jedoch größere Druckverluste durch die Gebläse überwunden werden. Dies ist bei einer von unten nach oben gerichteten Druckbelüftung kritisch, da hierdurch die Kanalbildung gefördert wird, die im Interesse einer gleichmäßigen Sauerstoffversorgung und biologischen Trocknung des Rottegemisches zu vermeiden ist. Ein weiterer Nachteil der von unten nach oben gerichteten Belüftung zeigte sich dadurch, daß in Folge eines durch die Ansaugwirkung des Fördergebläses entstehenden Unterdruckes zwischen der Oberfläche des Rottegemisches und dem Dekkel des Behälters eine Wasserübersättigung durch Partialdruckveränderung entstand, was zu einer Wassertropfenausscheidung an der Oberfläche des Abfallgemisches führte und den somit vorher erreichten Trocknungseffekt wieder verschlechterte. Ein hiermit weiterhin verbundener Nachteil besteht darin, daß im Unterdruckbereich eine wassergesättigte Luft kein zusätzliches Wasser aus der Sikkerwasserrückführung aufnehmen kann und ein Trocknungseffekt somit nicht erreichbar ist. Ein konstruktiver Nachteil besteht darin, daß ein Unterdruck im Raum zwischen Deckel und Schüttgutoberfläche zu einer statisch hochbeanspruchten, stabilen und damit teuren Ausführung führt.

Zur Erhöhung der in einem Behälter zu verarbeitenden Abfallmenge ist es wünschenswert, die Höhe des Behälters zu vergrößern. Wenn allerdings der Behälter mit einer höheren Schüttung betrieben wird, müssen durch die Gebläse, die den Luftstrom durch die Abfälle erzeugen, aufgrund der größeren Schütthöhen auch größere Druckverluste überwunden werden. Hierdurch kann es vorkommen, daß der Druck über den Abfällen, also zwischen der oberen Fläche der Abfallschüttung und dem Deckel des Behälters, übermäßig ansteigt oder absinkt. Dies hat wiederum zur Folge, daß der Deckel des Behälters durch den Druckunterschied zwischen dem Raum zwischen Schüttung und Deckel einerseits und der umgebenden Atmosphäre andererseits übermäßig beansprucht wird. Wenn der Außendruck größer ist als der Innendruck, wölbt sich der Deckel nach innen (zur Schüttung hin), wenn der Innendruck größer ist, wölbt sich der Deckel nach außen. Hierdurch können unzulässige Belastungen des Deckels des Behälters entstehen.

Aufgabe der Erfindung ist es, das vorbekannte Verfahren zum Kompostieren von Abfällen und den vorbekannten geschlossenen Behälter zum Kompostieren von Abfällen zu verbessern.

Erfindungsgemäß wird diese Aufgabe bei einem Verfahren der eingangs angegebenen Art dadurch gelöst, daß der Druck über den Abfällen derart gesteuert und/oder geregelt wird, daß sich der Deckel des Behälters nicht einwölbt oder auswölbt. Bei einem geschlossenen Behälter zum Kompostieren von Abfällen wird die Aufgabe gelöst durch eine Steuereinrichtung oder Regeleinrichtung zum Steuern bzw. Regeln des Druckes über den Abfällen derart, daß sich der Deckel des Behälters nicht einwölbt oder auswölbt. Die Drucksteuerung bzw. -regelung wird derart durchgeführt, daß die Einwölbung oder Auswölbung des Deckels ein zulässiges Maß nicht überschreiten. Bei einem Deckel, der geöffnet werden kann oder der von dem Behälter lösbar ist muß die Steuerung oder Regelung ferner derart durchgeführt werden, daß der Deckel nicht angehoben wird und die Dichtigkeit in einem ausreichenden Maß gewährleistet ist.

Vorteilhafte Weiterbildungen sind in den Unteransprüchen beschrieben.

Vorzugsweise werden die Abfälle von unten nach oben durchströmt. Grundsätzlich wäre es allerdings auch möglich, daß die Abfälle von oben nach unten durchströmt werden.

Vorteilhaft ist es, wenn der Druck über den Abfällen derart gesteuert bzw. geregelt wird, daß er im wesentlichen dem Atmosphärendruck entspricht, also dem Druck der umgebenden Atmosphäre.

Die Erfindung ist mit besonderem Vorteil anwendbar, wenn der Deckel zu öffnen ist oder vom Behälter lösbar ist. Eine besonders einfache Lösung wird geschaffen, wenn der Deckel auf dem Behälter aufliegt. Er kann allerdings auch an dem Behälter angeschlagen sein.

Vorzugsweise ist der Deckel durch eine umlaufende Dichtung abgedichtet. Die Dichtung ist vorzugsweise innen hohl.

Vorteilhaft ist es, wenn der Deckel mit Rohrleitungen versehen ist, die zur Verregnung mit Wasser, vorzugsweise Sickerwasser, dienen. Vorteilhaft ist es, wenn die Rohrleitungen des Deckels durch Kupplungen, vorzugsweise Schnellkupplungen, an entsprechende Rohrleitungen des Behälters anschließbar sind.

Eine weitere vorteilhafte Weiterbildung ist dadurch gekennzeichnet, daß über den Abfällen ein leichter Überdruck erzeugbar ist bzw. erzeugt wird. Dieser leichte Überdruck dient insbesondere zum Öffnen des Deckels.

An einer oder mehreren Ecken des Deckels können Führungswinkel oder dergleichen zur exakten Positionierung vorgesehen sein.

Vorteilhaft ist es, wenn auf der Oberseite des Deckels eine Zwischenkonstruktion vorgesehen ist, die dazu dient, die Aufnahme des Deckels durch einen Kran oder ein sonstiges Gerät zu ermöglichen oder zu erleichtern.

Die Öffnungen des Lochbodens können düsenförmig ausgestaltet sein. Dies ist insbesondere von Vorteil, wenn die Abfälle von unten nach oben durchströmt werden. In diesem Fall weisen die Düsen vorzugsweise einen sich nach oben verjüngenden Querschnitt auf. Ferner ist es vorteilhaft, wenn die Kanten am Lufteintritt abgerundet sind.

Vorteilhaft ist es, wenn in der Abluftleitung, die von dem Raum oberhalb der Abfälle weg führt, ein Sauggebläse vorgesehen ist. Hierdurch kann eine Druckverminderung in dem Raum über den Abfällen hervorgerufen werden, durch die ein dort möglicherweise vorhandener Überdruck abgebaut bzw. kompensiert werden kann.

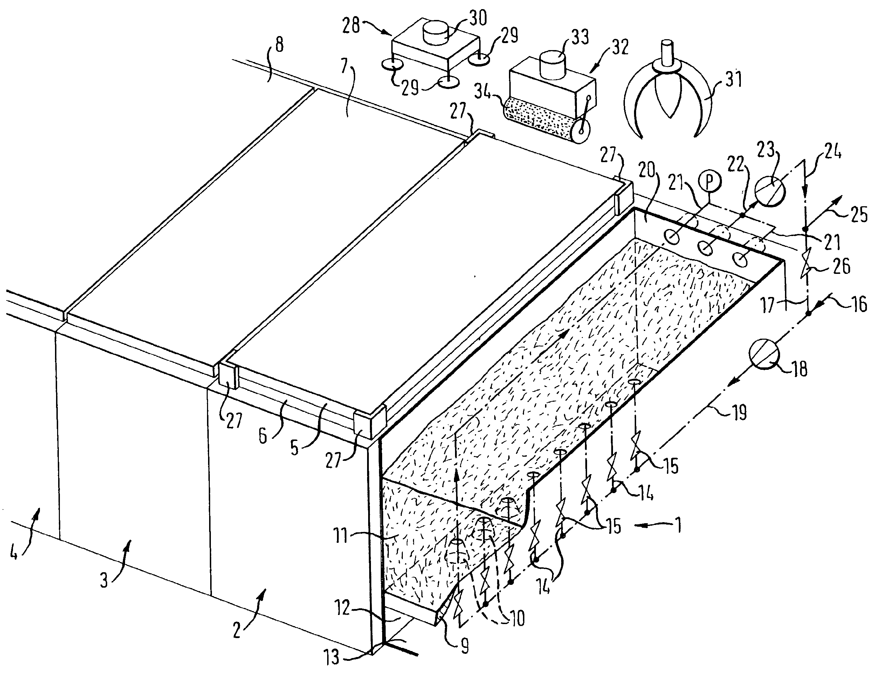

Ein Ausführungsbeispiel der Erfindung wird nachstehend anhand der beigefügten Zeichnung im einzelnen erläutert. In der Zeichnung zeigt die
- einzige Figur: einen Behälter zum Kompostieren von Abfällen in einer schematischen perspektivischen Ansicht.

Die einzige Figur zeigt vier nebeneinander angeordnete Behälter 1, 2, 3, 4, die jeweils durch einen Deckel 5, 6, 7, 8 verschließbar sind. Der Behälter 1 ist geöffnet.

Sein Deckel 5 wurde abgehoben und auf den Deckel 6 des Behälters 2 aufgelegt. Die Behälter 2, 3, 4 sind durch die Deckel 6, 7, 8 verschlossen.

Im unteren Bereich des Behälters 1 befindet sich ein waagrechter Lochboden 9 mit Öffnungen 10. Auf dem Lochboden 9 liegen die Abfälle 11 in Form einer Schüttung, die fast den gesamten Raum über dem Lochboden 9 ausfüllt, auf.

Der Raum 12 zwischen der Grundfläche 13 des Behälters 1 und dem Lochboden 9 ist in mehrere Kammern unterteilt (in der Zeichnung nicht dargestellt), zu denen jeweils eine Zuluftleitung 14 führt, die durch Ventile 15 individuell in jeweils verschiedenem Ausmaß aufsteuerbar und verschließbar sind.

In Betrieb, wenn also der Deckel 5 auf dem Behälter 1 aufliegt, wird Zuluft 16 und Umluft 17 durch einen Zuluft-Ventilator 18 in eine Zuluft-Sammelleitung 19 geführt und von dort über die Zuluftleitungen 14 und die Ventile 15 in den Raum 12 eingebracht. Die Luft strömt durch die Düsen 10 in die Abfälle 11 hinein. Sie durchströmt die Abfälle von unten nach oben und erreicht dann den Raum 20 zwischen der oberen Endfläche der Abfälle 11 und dem (dann aufliegenden) Deckel 5. Der Deckel enthält ein Rohrleitungssystem zur Verregnung von Sickerwasser. Es wird über Schnellkupplungen an ein festinstalliertes Rohrleitungssystem händisch angeschlossen. Die Abluft wird von dem Raum 20 durch Abluftleitungen 21 abgezogen, die im oberen Endbereich einer Seitenwand in den Behälter münden. In einer oder mehreren der Abluftleitungen 21 befinden sich Druckregler bzw. Druckmessgeräte. Die Abluftleitungen 21 münden in eine Abluft-Sammelleitung 22, in der ein Abluftventilator 23 vorgesehen ist. Der Abluftventilator 23 speist eine Umluftleitung 24, von der Abluft 25 in die Atmosphäre abgeleitet werden kann oder einem anderen Behälter zugeführt werden kann. Die weitere Abluft wird über ein Ventil 26 in die Leitung 17 eingespeist und von dort dem Zuluft-Ventilator 18 als Umluft zugeführt.

Der Druck in dem Raum 20 über den Abfällen 11 bzw. über der Abfallschüttung einerseits und unter dem (dann aufliegenden) Deckel 5 andererseits wird derart gesteuert bzw. geregelt, daß sich der Deckel 5 des Behälters im aufgelegten Zustand nicht mehr als zulässig einwölbt oder auswölbt oder angehoben wird. Vorzugsweise wird der Druck derart gesteuert bzw. geregelt, daß er im wesentlichen dem Druck der umgebenden Atmosphäre entspricht.

Die Luftführung ist derart gestaltet, daß die Luft zur Versorgung der Mikroorganismen im Abfallgemisch (Rottegemisch) über druckabhängig steuerbare Auslässe in die abgeteilten Kammern unterhalb des Lochbodens 9 geleitet wird, auf dem das Rottegemisch ruht. Der Lochboden 9 besteht aus Betonelementen von einer Dicke, die die darauf ruhende Last aufnehmen können, wobei sich die Last aus einer Schütthöhe von 2 bis 6 Metern feuchter Abfälle ergibt. Durch die Dicke der Bodenelemente können die Luftdurchtrittsöffnungen 10 einen in der Längsachse konischen Querschnitt aufweisen, der sich nach oben hin verjüngt, mit vorzugsweise abgerundeten Kanten am Lufteintritt. Durch den Düseneffekt dringt die Luft tiefer in das Rottegemisch ein, wodurch die Randgängigkeit vermieden und eine homogene Luftverteilung erreicht wird. Luftdurchbrüche, also im Querschnitt vergrößerte Kanäle durch die Schüttung der Abfälle 11, die eine gleichmäßige Versorgung der Abfälle mit Luft verhindern würden, werden vermieden.

Die Luft tritt durch das Rottegemisch hindurch, wobei sie sich durch die mikrobiologisch freiwerdende Wasserdampfenthalpie erwärmt und Wasser aufnimmt. Die Wasseraufnahmefähigkeit wird von der Wasserdampfpartialdruckdifferenz zwischen der Oberflächenfeuchte des Rottegutes und der relativen Feuchte in der sich temperaturbeeinflußt ändernden Spülluft bestimmt. Beim Austritt der Luft aus dem Rottegemisch in den Raum 20 wird eine Rückkondensation durch Taupunktunterschreitung oder Ausscheidung durch Übersättigung dadurch verhindert, daß zwischen der Oberfläche des Rottegemisches und dem Deckel, also in dem Raum 20, atmosphärischer Druck herrscht. Wenn hier ein Überdruck entstehen würde, würden unangenehme Gerüche in die Umgebung austreten; wenn hier ein Unterdruck herrschen würde, würde Wasser ausfallen, wenn der Sättigungspartialdruck des Wasserdampfgehaltes der Luft unterschritten wird, ohne daß sich die Luft abkühlt. Dies würde letztlich dazu führen, daß die Trocknung längern dauern würde und höhere Betriebskosten verursachen würde. Ein weiterer Nachteil eines Unterdrucks wäre die Gefahr einer Unterdruckverformung des Deckels.

Durch die erfindungsgemäße Lösung wird eine Kanalbildung in den Abfällen 11 (in der Schüttung; in dem Rottegemisch) im Interesse einer gleichmäßigen Sauerstoffversorgung und biologischen Trocknung des Rottegemisches vermieden. Ferner entsteht in dem Raum 20 keine Wasserübersättigung durch Partialdruckveränderung, die zu einer Wassertropfenausscheidung an der Oberfläche des Abfallgemisches 11 führen könnte und dort den vorher erreichten Trocknungseffekt wieder verschlechtern könnte.

Die Rückführung und Verdunstung von nach unten aus dem Rottegemisch austretenden Sickerwasser in den warmen Innenraum der Rottebox bereitet keine Probleme mehr, da die Rohrleitungen nicht mehr mit den Fördergeräten in Berührung kommen können. Sie werden an den Deckel montiert und über Schnellkupplungen händisch an die Zuführleitungen angeschlossen. Somit befinden sich im Innenraum der Rottebox keine Elemente mehr, die von Fördergeräten zerstört werden können.

Die Steuerung des oder der Belüftungsgebläse ist so ausgelegt, daß bei Öffnung des Deckels nach beendetem Rotteprozeß im Raum 20 über dem Rottegemisch ein leichter Überdruck erzeugt wird. Danach wird der Kran beim Öffnen des Behälters, also beim Abheben des Deckels 5, so gesteuert, daß der Deckel zunächst an einem Ende seiner Längskonstruktion leicht angehoben wird, so daß ein Druckausgleich mit der umgebenden Atmosphäre erfolgt. Sodann wird der Deckel gesamtheitlich über seine Länge und Breite angehoben und zu einer Ablegestelle transportiert.

Durch eine druckabhängige Steuerung des oder der Belüftungsgebläse ist eine Deckelkonstruktion möglich, die weder überdrucksicher noch unterdrucksicher sein muß. Der Deckel besitzt eine auf glatter Fläche rundumlaufende Dichtung, die in Folge des Eigengewichtes des Deckels dicht schließt, so daß keine unangenehmen Gerüche austreten können. Die Dichtung ist vorzugsweise innen hohl, so daß sie bei Entlastung jeweils wieder ihre Normalform annimmt.

Eine leichte Druckerhöhung unterhalb des Deckels wird dann erzeugt, wenn der Deckel an einer Stelle gelöst werden soll. Es wird dabei eine ähnlich Wirkung erzielt wie beim Öffnen eines Einmachglases, indem man einen Druckausgleich herstellt. Die aufzubringende Kraft ergibt sich aus der Höhe des Druckes auf die Unterfläche des Deckels; sie entspricht etwa dem Gewicht des Deckels.

Der Deckel besitzt ein Rohrleitungssystem zur Verregnung von Sickerwasser, das über Schnellkupplungen an ein festinstalliertes Rohrleitungssystem händisch angeschlossen wird.

Damit ein langes Rangieren des Deckels bis zur korrekten Lage vermieden wird, sind jeweils vorzugsweise an den Ecken Führungswinkel 27 angeordnet, die den Deckel exakt positionieren. Wie aus der Zeichnungsfigur ersichtlich kann dadurch der Deckel 5 auf dem Deckel 6 des Behälters 2 exakt positioniert werden. Die an den Ecken des Deckels 6 vorgesehenen, nach oben weisenden Führungswinkel 27 überragen die obere Endfläche des Deckels 6, auf die der Deckel 5 aufgelegt wird, wo er durch die Führungswinkel 27 exakt positioniert wird. Die Führungswinkel 27 sind so bemessen, daß mindestens zwei Deckel übereinander abgelegt werden können, wie die Deckel 6 und 5 in der Zeichnungsfigur.

Zur Aufnahme der Deckel durch den Kran dient eine Trage-Zwischenkonstruktion 28. In ihrer einfachsten Ausführung besteht diese aus einer Profilstahl-Rahmenkonstruktion, die eine mechanische Verbindung zum Deckel herstellt. Weitere Ausführungsformen sind möglich. Die Trage-Zwischenkonstruktion 28 kann beispielsweise als Vakuumheber mit Saugnäpfen 29 ausgestaltet sein. Anstelle der Saugnäpfe können auch Elektromagnete vorgesehen werden (in der Zeichnung nicht dargestellt; in diesem Fall muß in dem Deckel eine ausreichende Menge an magnetischem Material vorhanden sein, beispielsweise Armierungseisen oder Ähnliches). Die Trage-Zwischenkonstruktion 28 besitzt Greifernocken 30 für den Greiferkran 31, durch den auch die Befüllung und Entleerung der Behälter erfolgen kann.

Da die Deckel einzelner Behälter bei der Beschickung und/oder Entleerung von dem materialführenden Kran, beispielsweise dem Greiferkran 31, überfahren werden, können einzelne Abfallteile herabfallen und so die Oberflächen der Deckel wie auch die Auflageflächen für die Deckel verschmutzen. Zur Reinigung dieser Flächen werden vom Kran bewegte und zusätzlich selbsttätig verfahrbare Kehrvorrichtungen 32 verwendet, die Greifernocken 33 für den Greiferkran 31 aufweisen sowie eine Kehreinrichtung 34, beispielsweise eine Bürste. Zum Säubern könnten auch Saugvorrichtungen benutzt werden. Die Kehrvorrichtung 32 bzw. eine Saugvorrichtung können die herabgefallenen Abfallteile zu einem an den Behältern 1, 2, 3, 4 vorbeiführenden Sammelfördeband (in der Zeichnung nicht dargestellt) bewegen, das sie in dem Vorbunker der Behälter führen kann.

Durch die Erfindung wird ein Verfahren zur Kompostierung von Abfällen in mittels einer Krananlage zu beschickenden und zu entleerenden Behältern (Rotteboxen) geschaffen. Die Erfindung ermöglicht die Durchführung der Kompostierung und biologischen Trocknung von organischen Abfällen in einer durch Kranbeschickung zu befüllenden und durch Kranaustragung entleerbaren Rottebox. Insbesondere eignet sich die Vorrichtung zur Durchführung des in der DE-PS 36 37 393 beschriebenen Verfahrens, bei dem durch eine dem mikrobiellen Wachstum angepaßte Luftzuführung ohne Bewegung der Abfälle zunächst die biologisch leichter zersetzbaren organischen Bestandteile der Abfälle abgebaut werden und bei dem die Kompostierung durch Trocknung dann zum Stillstand gebracht wird, wenn die biologisch leichter zersetzbaren organischen Bestandteile der Abfälle abgebaut worden sind. Das Verfahren ermöglicht eine Schütthöhe von bis zum 6 Metern und möglicherweise noch mehr. Während der Belüftung des Rottegutes erfolgt in dem Raum 20 zwischen Schüttgutoberfläche und Unterfläche des den Behälter von oben abdeckenden Deckels eine Druckregelung für die Transportluft mit der Absicht, ein Einwölben oder Auswölben des Deckels zu verhindern. Der Kran kann neben einer Beschickung und Entleerung der Rotteboxen auch einen Transport der Deckel, eine Reinigung der Auflageflächen für den Deckel und eine Reinigung der Deckeloberflächen durchführen. Die zur Sauerstoffversorgung der Mikroorganismen erforderliche Luft kann auch bei größeren Schütthöhen dadurch eindringen, daß in dem Lochboden 9 aufgrund seiner Dicke düsenförmige Öffnungen 10 vorhanden sind, die eine Beschleunigung der Luft und damit eine höhere Geschwindigkeitsenergie mit größerer Eindringtiefe bewirken. Die bei der Beschickung und Entleerung der Behälter (Rotteboxen) vom Kran herabfallenden Abfallteile können von einer Kehrvorrichtung zu einem Sammelförderer vor Kopf der Behälter und von hier zu einem Sammelbunker transportiert werden. Die Erfindung ermöglicht eine Lösung, bei der ein Kranlaufwerk mit einem Katzfahrwerk und der vom Hubwerk getragene Schalengreifer sowohl eine mechanisch betätigte Vorrichtung zur Aufnahme einer Kehrvorrichtung als auch eine Magnethebe- oder Unterdrucksaugvorrichtung aufnehmen kann. Die mechanisch betätigte Aufnahmevorrichtung kann elektromagnetisch betätigte Kupplungen und/oder vakuumbetätigte Kupplungen aufweisen. Die elektrischen Antriebe auf der mechanisch betätigten Aufnahmevorrichtung können durch eine Eigenstromversorgung, vorzugsweise einen mittels Dieselmotor betriebenen Generator, elektrisch versorgt werden. Der Behälter (die Rottebox) besteht vorzugsweise aus einem etwa 6 bis 8 Meter hohen Betongehäuse mit Betondüsenboden und einem mittels Kran aufnehmbarem und auflegbarem Deckel.

Der Behälter 1 besitzt eine Belüftungseinrichtung, die den Zuluftventilator 18, den Abluftventilator 23 und weitere Bestandteile umfaßt, insbesondere Rohrleitungen und Ventile. Für jeden der Behälter 1 bis 4 kann eine gesonderte vollständige Belüftungseinrichtung vorhanden sein. Es ist aber auch möglich, einzelne Teile der Belüftungseinrichtung für alle vier oder auch noch mehr Behälter vorzusehen. In diesem Fall umfaßt die Belüftungseinrichtung eines Behälters nicht sämtliche Teile, die in der Zeichnung für den Behälter 1 dargestellt sind.

## Patentansprüche

1. Verfahren zum Kompostieren von Abfällen in einem geschlossenen Behälter (1; 2; 3; 4), in dem die Abfälle (11) auf einem Lochboden (9) aufliegen und von einem sauerstoffhaltigen Gas, vorzugsweise Luft, durchströmt werden,
**dadurch gekennzeichnet,**
**daß** der Druck über (20) den Abfällen (11) derart gesteuert und/oder geregelt wird, daß sich der Deckel (5; 6; 7; 8) des Behälters nicht einwölbt oder auswölbt.

2. Verfahren nach Anspruch 1, **dadurch gekennzeichnet, daß** die Abfälle (11) von unten nach oben durchströmt werden.

3. Verfahren nach Anspruch 1 oder 2, **dadurch gekennzeichnet, daß** der Druck über (20) den Abfällen (11) derart gesteuert und/oder geregelt wird, daß er im wesentlichen dem Atmosphärendruck entspricht.

4. Verfahren nach einem der vorhergehenden Ansprüche, **dadurch gekennzeichnet, daß** der Deckel zu öffnen ist oder vom Behälter lösbar ist.

5. Verfahren nach Anspruch 4, **dadurch gekennzeichnet, daß** der Deckel auf dem Behälter aufliegt.

6. Verfahren nach Anspruch 4 oder 5, **dadurch gekennzeichnet, daß** der Deckel durch eine umlaufende Dichtung abgedichtet ist, die vorzugsweise innen hohl ist.

7. Verfahren nach einem der vorhergehenden Ansprüche, **dadurch gekennzeichnet, daß** der Deckel mit Rohrleitungen versehen ist.

8. Verfahren nach Anspruch 7, **dadurch gekennzeichnet, daß** die Rohrleitungen des Deckels durch Kupplungen, vorzugsweise Schnellkupplungen, an Rohrleitungen des Behälters anschließbar sind.

9. Verfahren nach einem der vorhergehenden Ansprüche, **dadurch gekennzeichnet, daß**, vorzugsweise zum Öffnen des Deckels, ein leichter Überdruck über (20) den Abfällen (11) erzeugt wird.

10. Verfahren nach einem der vorhergehenden Ansprüche, **dadurch gekennzeichnet, daß** an einer oder mehreren Ecken des Deckels Führungswinkel (27) vorgesehen sind.

11. Verfahren nach einem der vorhergehenden Ansprüche, **dadurch gekennzeichnet, daß** auf der Oberseite des Deckels eine Zwischenkonstruktion (28) vorgesehen ist, die vorzugsweise mit dem Deckel lösbar verbindbar ist.

12. Verfahren nach einem der vorhergehenden Ansprüche, **dadurch gekennzeichnet, daß** die Öffnungen (10) des Lochbodens (9) düsenförmig ausgestaltet sind.

13. Geschlossener Behälter zum Kompostieren von Abfällen (11) mit einem Lochboden (9) und einer Belüftungseinrichtung,
**gekennzeichnet durch**
eine Steuereinrichtung und/oder Regeleinrichtung zum Steuern bzw. Regeln des Druckes über den Abfällen (11) derart, daß sich der Deckel (5; 6; 7; 8) des Behälters (1; 2; 3; 4) nicht einwölbt oder auswölbt.

14. Behälter nach Anspruch 13, **gekennzeichnet durch** die weiteren Merkmale eines oder mehrerer der Ansprüche 1 bis 12.

15. Behälter nach Anspruch 13 oder 14, **gekennzeichnet durch** ein Sauggebläse (23) in der vom Behälter wegführenden Abluftleitung (22).

16. Behälter nach einem der Ansprüche 13 bis 15, **gekennzeichnet durch** einen Kehrvorrichtung (32).
